# FASCICULE DE BREVET EUROPEEN

(11) **EP 3 555 184 B1**
(45) Date de publication et mention de la délivrance du brevet: **16.09.2020**
(21) Numéro de dépôt: 17825570.9
(22) Date de dépôt: 12.12.2017
(51) Int. Cl.: C08J 9/02, C08G 63/06, C08J 9/00

(54) **MOUSSES ORGANIQUES THERMODURCIES ET PROCEDE DE FABRICATION**
DUROPLASTISCHE ORGANISCHE SCHÄUME UND HERSTELLUNGSVERFAHREN
THERMOSETTING ORGANIC FOAMS AND MANUFACTURING METHOD

(30) Priorité: 13.12.2016 FR 1662370
(43) Date de publication de la demande: 23.10.2019
(73) Titulaire: SAINT-GOBAIN ISOVER, 92400 Courbevoie (FR)
(72) Inventeur: CHENAL, Marion, 93100 Montreuil (FR); SAVONNET, Marie, 75018 Paris (FR)
(74) Mandataire: Saint-Gobain Recherche
(86) Numéro de dépôt international: PCT/FR2017/053519
(87) Numéro de publication internationale: WO 2018/109362

(56) Documents cités:
- CN-A- 102 676 591
- US-A- 4 542 203
- US-A- 6 140 458

## Description

La présente invention concerne des mousses polyester solides thermodurcies obtenues par réaction d'estérification et moussage chimique d'une composition expansible et thermodurcissable contenant au moins un acide dicarboxylique alpha-hydroxylé, au moins un agent tensioactif et un catalyseur d'estérification.

Il est connu de préparer des mousses polyester thermodurcies par réaction d'un polyol et d'un polyacide.

La demande internationale WO2012/052385 décrit un polymère expansé obtenu par réaction de glycérol et d'acide citrique à une température comprise entre 80 et 130°C jusqu'à ce que le taux de conversion soit au moins égal à 90 %, éventuellement en présence d'un catalyseur d'estérification. Lorsqu'un taux de conversion d'au moins 90 %, de préférence 98 %, est atteint, le mélange réactionnel est chauffé à une température plus élevée, voisine de 150 °C. La première étape à basse température est destinée à éviter dans la mesure du possible la décarboxylation de l'acide citrique.

Le procédé décrit dans ce document nécessite des temps réactionnels très longs, allant de plusieurs heures à plusieurs dizaines d'heures. La polymérisation est mise en œuvre de préférence dans des moules anti-adhésifs, par exemple en Teflon. Les mousses ainsi obtenues ont une masse volumique comprise entre 200 et 850 g/litre.

La demande internationale WO2013/121033 décrit un perfectionnement de ce procédé où la polymérisation du glycérol et de l'acide citrique est mise en œuvre au contact d'un substrat avec une couche externe comprenant au moins un métal, un oxyde métallique ou un halogénure métallique. Ce procédé fournit des mousses présentant une taille des pores plus régulière que celles préparées par le procédé décrit dans WO 2012/052385. Les masses volumiques revendiquées sont comprises entre 50 et 850 g/litre. Les mousses préparées dans les exemples selon l'invention présentent des masses volumiques comprises entre 282 g/litre et 482 g/litre.

La demande EP2814868 divulgue un procédé de formation de mousse par réaction d'estérification entre un acide tricarboxylique et du glycérol, en présence d'une surface en aluminium.

Enfin, la demande internationale PCT/FR2016/051446 au nom de la demanderesse, revendiquant la priorité de la demande française n° 1555789 (aucune des deux demandes n'étant encore publiée au moment du dépôt de la présente invention), divulgue la préparation d'une mousse par chauffage d'une composition contenant à la fois du glycérol ou un oligomère de glycérol, de l'acide citrique, un agent tensioactif et un catalyseur d'estérification.

Dans les quatre demandes ci-dessus, le moussage de la composition liquide se fait grâce à la décarboxylation de l'acide citrique qui joue le double rôle d'agent moussant chimique et de réactif participant à la construction du réseau polymérique réticulé qui confère à la mousse finale sa consistance solide.

Le document CN102676591 décrit un procédé de fabrication de polyester à partir d'acide 3-hydroxypentanoïque, une lipase étant utilisée comme catalyseur.

La présente invention est basée sur la découverte que certains acides polycarboxyliques α-hydroxylés pouvaient, à l'instar de l'acide citrique, jouer le rôle à la fois d'agent chimique de moussage et de réactif de la réaction de polymérisation et de réticulation aboutissant à la formation d'une mousse solide.

Les inventeurs ont été particulièrement surpris de constater que, contrairement à l'acide citrique, certains acides dicarboxyliques α-hydroxylés formaient des mousses solides simplement en présence d'un agent tensioactif et d'un catalyseur d'estérification, sans qu'il soit nécessaire qu'un polyol, tel qu'un hydrate de carbone ou du glycérol, soit présent. Les diacides α-hydroxylés testés semblent ainsi être capables de former un réseau tridimensionnel réticulé par homopolymérisation, l'acide fournissant à la fois les fonctions acide, les fonctions hydroxyle et l'agent de moussage (CO₂ formé par décarboxylation de l'acide). Cela n'était pas le cas de l'acide citrique qui avait besoin d'un deuxième réactif polyhydroxylé pour pouvoir former un réseau tridimensionnel réticulé permettant l'obtention d'une mousse solide.

La présente invention a par conséquent pour premier objet un procédé de fabrication d'une mousse polyester solide, comprenant les étapes successives suivantes :
(a) mise à disposition d'une composition expansible et thermodurcissable contenant
   - au moins 60% en poids, rapporté au poids sec total de la composition, d'au moins un acide dicarboxylique α-hydroxylé de formule (I)

      HOOC-(CHR¹)ₙ-CHOH-COOH

      où
      n est un entier allant de 1 - 4, de préférence de 1 - 3, en particulier 1 ou 2, et de manière tout particulièrement préférée 1, et
      chaque R¹ représente indépendamment un atome d'hydrogène, un groupe hydroxyle (-OH) ou un groupe alkyle, de préférence en C₁₋₄, et
   - au moins un agent tensioactif, et
   - un catalyseur d'estérification choisi parmi les acides forts, les sels minéraux de métaux de transition, les composés contenant un atome de phosphore, les composés contenant à la fois du fluor et du bore et les acides de Lewis,
(b) introduction de la composition expansible et thermodurcissable dans un moule ou application de la composition expansible sur un support,
(c) chauffage de la composition expansible et thermodurcissable à une température au moins égale à 140 °C, de préférence au moins égale à 160 °C, et de manière tout particulièrement préférée comprise entre 160 °C et 190 °C, jusqu'à formation d'un bloc de mousse solide.

La présente invention a en outre pour objet une mousse polyester solide susceptible d'être obtenue par le procédé ci-dessus.

Par ailleurs, à la connaissance des inventeurs, les compositions expansibles et thermodurcissables utilisées dans le procédé de la présente invention n'ont jusqu'ici pas été décrites et la présente demande a par conséquent également pour objet une composition expansible et thermodurcissable contenant
- au moins 60 % en poids, rapporté au poids sec total de la composition, d'au moins un acide dicarboxylique α-hydroxylé de formule (I)
   HOOC-(CHR¹)ₙ-CHOH-COOH où n est un nombre entier allant de 1 - 4, de préférence de 1 - 3, en particulier 1 ou 2, et de manière tout particulièrement préférée 1, et chaque R¹ représente indépendamment un atome d'hydrogène, un groupe hydroxyle (-OH) ou un groupe alkyle, de préférence un groupe alkyle en C₁₋₄,
- au moins un agent tensioactif, et
- un catalyseur d'estérification choisi parmi les acides forts, les sels minéraux de métaux de transition, les composés contenant un atome de phosphore, les composés contenant à la fois du fluor et du bore et les acides de Lewis.

Enfin, la présente demande a pour quatrième objet l'utilisation d'une telle composition expansible et thermodurcissable pour la fabrication d'une mousse polyester solide.

Comme expliqué en introduction, la composition expansible et thermodurcissable de la présente invention comprend trois composants essentiels, à savoir :
- un acide dicarboxylique α-hydroxylé de formule (I)

   HOOC-(CHR¹)ₙ-CHOH-COOH,
- un agent tensioactif, et
- un catalyseur d'estérification.

Le premier composant essentiel, c'est-à-dire l'acide dicarboxylique α-hydroxylé, représente au moins 60 %, de préférence au moins 70 % et en particulier au moins 80 % du poids sec de la composition expansible et thermodurcissable. On entend ici par « poids sec » le poids de la composition expansible et thermodurcissable après séchage à une température d'environ 30 °C et sous vide jusqu'à poids constant, c'est-à-dire sans réaction de décarboxylation ni d'estérification.

L'acide dicarboxylique α-hydroxylé est de préférence choisi dans le groupe constitué d'acide tartrique (HOOC-CHOH-CHOH-COOH) et d'acide malique (HOOC-CH₂-CHOH-COOH), et les inventeurs ont obtenu des mousses d'une qualité très satisfaisante en utilisant l'acide tartrique qui, de ce fait, est particulièrement préféré pour la mise en œuvre de la présente invention.

Comme le montrent certains exemples comparatifs ci-après, d'autres acides organiques carboxyliques non englobés par la formule (I) mais ayant une structure proche de celle-ci ne permettent pas la formation de mousses solides durcies par homopolymérisation, c'est-à-dire en l'absence d'un réactif polyhydroxylé. Ainsi, l'acide aspartique (acide dicarboxylique α-aminé), l'acide gluconique (acide monocarboxylique α-hydroxylé), l'acide tricarballylique (acide tricarboxylique non hydroxylé), l'acide lactique (acide monocarboxylique α-hydroxylé) et l'acide citrique (acide tricarboxylique α-hydroxylé), en présence d'un agent tensioactif et d'un catalyseur, mais en l'absence d'un composant polyhydroxylé, n'ont pas permis de préparer des mousses solides persistantes ayant des propriétés mécaniques satisfaisantes.

Le deuxième composant essentiel de la composition expansible et thermodurcissable de la présente invention est un agent tensioactif ou un mélange de plusieurs agents tensioactifs.

La fonction de cet ingrédient est d'améliorer la qualité de la mousse, c'est-à-dire de réduire la taille des pores, de resserrer la distribution de la taille des pores et de réduire la masse volumique des mousses durcies obtenues.

Dans un mode de réalisation intéressant, l'agent tensioactif est un mélange d'un tensioactif anionique et d'un tensioactif cationique. Dans le domaine des mousses aqueuses liquides, il est connu qu'une association de deux types d'agents tensioactifs de charges opposées permet de stabiliser le film de tensioactifs à l'interface eau/air en réduisant la répulsion entre molécules de même charge. Comme il sera montré ci-après dans les exemples, la Demanderesse a obtenu d'excellents résultats avec un mélange de dodécylsulfate de sodium (SDS) et de bromure de tétradécyltriméthyl ammonium (TTAB) et l'utilisation d'une association de ces deux agents tensioactifs constitue donc un mode de réalisation préféré. Le rapport en poids TTAB/SDS est de préférence compris entre 1,5 et 2,5, en particulier entre 1,8 et 2,2 et idéalement proche de 2.

Les agents tensioactifs non-ioniques constituent une alternative intéressante à l'association d'un tensioactif anionique et d'un tensioactif cationique. En effet, pour les agents tensioactifs non-ioniques, il n'existe pas de forces de répulsion entre têtes hydrophiles de même charge et certains tensioactifs non-ioniques sont de ce fait particulièrement appropriés pour la formation de mousses de bonne qualité.

C'est le cas par exemple des alkylpolyglycosides (APG) qui sont des molécules comportant une tête hydrophile formée d'un ou de plusieurs motifs de sucre, greffée de chaînes grasses alkyle.

Les alkylpolyglycosides comportent de préférence entre 1 et 2 motifs glucoside et les chaînes alkyle comportent de préférence de 8 à 14 atomes de carbone et sont de préférence des chaînes alkyle linéaires.

On peut citer à titre d'exemples d'alkylpolyglycosides les produits de la marque Glucopon, notamment le Glucopon 600 CSUP (lauryl glucoside) et le Glucopon 650 EC (coco glucoside).

La quantité de l'agent tensioactif représente avantageusement de 0,1 à 10 %, de préférence de 1 à 8 % et en particulier de 2 à 6 % du poids sec total de la composition expansible.

Le rapport molaire agent tensioactif / acide dicarboxylique α-hydroxylé est avantageusement compris entre 1,0 et 5,0 %, de préférence entre 1,2 % et 4,0 %, en particulier entre 1,5 % et 3,5 %. Lorsqu'on utilise un mélange d'agents tensioactifs ces valeurs s'entendent pour la somme de tous les agents tensioactifs utilisés.

La présence d'un catalyseur d'estérification accélère de manière très significative la vitesse de moussage et de durcissement de la composition après chauffage à une température suffisante, généralement supérieure à 140 °C.

Les inventeurs ont testés un grand nombre de catalyseurs d'estérification, la très grande majorité étant des acides. Certains acides organiques faibles ou leurs sels de métaux alcalins déclenchent une réaction de moussage (décarboxylation), mais ne permettent pas l'obtention d'une mousse solide persistante ayant une résistance mécanique suffisante pour une utilisation en tant que produit d'isolation thermique et/ou phonique.

Les catalyseurs d'estérification ayant permis d'obtenir des mousses solides et persistantes sont donc choisis parmi
- les acides forts,
- les sels minéraux acides, en particulier les sels minéraux de métaux de transition,
- les composés contenant un atome de phosphore et
- les composés contenant à la fois du fluor et du bore
- les acides de Lewis.

Les acides forts sont des acides qui se dissocient totalement lorsqu'ils sont dissous dans l'eau. Les acides forts peuvent être des acides organiques ou minéraux, ils englobent par exemple les acides halogénhydriques, à savoir l'acide chlorhydrique, l'acide iodhydrique et l'acide bromhydrique, l'acide sulfurique (H₂SO₄), l'acide nitrique (HNO₃), l'acide chlorique (HClO₃), l'acide perchlorique (HClO₄), l'acide manganique (H₂MnO₄), l'acide permanganique (HMnO₄), l'acide trifluoroacétique, et les superacides englobant l'acide fluoroantimonique (HF.SbF₅), l'acide magique (HSO₃F.SbF₅), l'acide trifluorométhanesulfonique (HSO₃CF₃), l'acide fluorosulfurique (HSO₃F) et l'acide disulfurique (H₂S₂O₇).

On entend par « sel minéral acide » un sel minéral qui, lorsqu'il est introduit dans de l'eau déminéralisée, permet d'en abaisser le pH à une valeur inférieure à 3.

Ces sels minéraux acides n'englobent pas les sels minéraux des métaux alcalins et alcalino-terreux, mais englobent un grand nombre de sels de métaux de transition.

On peut citer à titre d'exemples de sels minéraux acides utilisables en tant que catalyseurs d'estérification les sulfates, phosphates, nitrates, chlorures et bromures d'aluminium, de gallium, de cuivre, de zinc, d'argent, de nickel, de fer et de plomb.

La Demanderesse a obtenu de bons résultats avec le sulfate d'aluminium, le sulfate de cuivre et le phosphate d'aluminium qui sont particulièrement préférés.

Les catalyseurs d'estérification contenant un atome de phosphore sont choisis par exemple dans le groupe constitué d'hypophosphite de métal alcalin (H₂PO₂M), phosphite de métal alcalin (HPO₃M₂), polyphosphate de métal alcalin (M₃PO₄), hydrogénophosphate de métal alcalin (M₂HPO₄), acide hypophosphoreux (H₃PO₂), acide phosphorique (H₃PO₄), acide alkylphosphonique (RPO₃H₂), acide pyrophosphorique (H₄P₂O₇), acide triméthaphosphorique (H₃O₉P₃), acide triphosphorique (H₅P₃O₁₀), acide tétrapolyphosphorique et anhydride phosphorique et un mélange de deux ou plusieurs de ces composés. L'hypophosphite de métal alcalin est particulièrement préféré.

Les composés contenant à la fois du fluor et du bore sont par exemple l'acide tétrafluoroborique ou un sel de cet acide, notamment le tétrafluoroborate de sodium, de potassium, de zinc ou d'ammonium.

Enfin, on peut citer comme acide de Lewis les organo-titanates (Rₙ(Ti)) et organo-zirconates (Rₙ(Zr)).

Le rapport molaire catalyseur d'estérification / acide dicarboxylique α-hydroxylé est avantageusement supérieur à 0,04, de préférence compris entre 0,05 et 0,40, en particulier entre 0,06 et 0,35 et idéalement entre 0,07 et 0,20.

Les compositions expansibles et thermodurcissables de la présente invention ont de préférence une teneur élevée en matières non volatiles, telles que l'eau. Les trois composants essentiels (acide dicarboxylique, catalyseur d'estérification et agent tensioactif), à condition d'être finement broyés, peuvent même être mélangés sous forme solide, c'est-à-dire en absence d'eau et le mélange peut être soumis au chauffage tel quel.

Afin d'améliorer l'homogénéité physique et chimique de la composition expansible et thermodurcissable, il est possible d'ajouter aux ingrédients solides une faible quantité d'un solvant volatil, de préférence de l'eau.

La quantité d'eau doit toutefois être assez faible et les compositions expansibles et thermodurcissables contiennent avantageusement au plus 40 % en poids, de préférence au plus 25 % en poids, plus préférentiellement au plus 15 % en poids et en particulier au plus 5 % en poids d'eau. Plus la quantité d'eau est faible, meilleur est le bilan énergétique global du procédé de formation de la mousse car l'évaporation de l'eau initiale consomme de l'énergie thermique.

La composition expansible et thermodurcissable peut bien entendu contenir, en plus des trois ingrédients essentiels décrits ci-dessus, d'autres additifs et ingrédients.

Ainsi, la composition expansible peut contenir en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

On peut citer en tant qu'autres ingrédients des parfums, colorants, pigments, agents antibactériens et antifongiques, plastifiants, agents anti-poussières etc.

D'autres ingrédients peuvent éventuellement réagir avec l'un ou plusieurs des ingrédients essentiels, notamment avec le diacide carboxylique. Ainsi, bien que l'acide dicarboxylique α-hydroxylé n'exige pas la présence d'un composant polyhydroxylé, un tel composant peut être présent en faible quantité, par exemple à raison de moins de 30 %, de préférence moins de 20 %, en particulier moins de 10 % en poids rapporté au poids de l'acide dicarboxylique α-hydroxylé.

Lorsque la composition expansible est étalée sous forme d'un film continu sur un support, l'épaisseur du film, avant chauffage, c'est-à-dire avant expansion et durcissement, est de préférence au moins égale à 1 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 cm³, de préférence au moins égal à 0,001 m³, en particulier au moins égal à 0,01 m³.

Le bloc de mousse se présente de préférence sous forme d'une plaque.

Pour déclencher la réaction de décarboxylation et estérification de l'acide dicarboxylique α-hydroxylé il est nécessaire de chauffer la composition expansible à une température d'au moins 140 °C. La température réactionnelle sera de préférence comprise entre 150 °C et 190 °C, idéalement entre 160 et 180 °C. Cette température est, bien entendu, celle mesurée au cœur du mélange réactionnel.

Pour chauffer la composition expansible à l'étape (c) on pourra utiliser en principe n'importe quel moyen usuel connu dans le domaine de la mise en œuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle mentionnée ci-dessus, par exemple comprise entre 160 et 210 °C.

Lorsqu'on chauffe le mélange réactionnel à une température comprise entre 160°C et 190 °C, on constate rapidement, tout au plus au bout de quelques minutes, l'augmentation du volume de la composition, puis le durcissement de la mousse. La durée nécessaire pour obtenir le durcissement complet de la mousse est bien entendu d'autant plus longue que la température de chauffage est basse.

La durée totale de l'étape de chauffage (c) est avantageusement comprise entre 10 minutes et 2 heures, de préférence entre 15 minutes et 1,5 heures, et idéalement entre 20 minutes et 1 heure.

Les mousses polyesters obtenues présentent une masse volumique comprise entre 20 et 80 kg/m³, de préférence entre 25 et 50 kg/m³, en particulier entre 27 et 48 kg/m³. Leur porosité peut être fermée ou ouverte, avec des pores présentant un diamètre moyen, déterminé par tomographie à rayons X, compris entre 100 et 800 µm.

### Exemples

On prépare plusieurs compositions expansibles thermodurcissables en mélangeant 100 mmoles d'acide, avec le catalyseur d'estérification et l'agent tensioactif. Les Tableaux 1-4 indiquent les quantités respectives des trois composants essentiels, exprimées en matières sèches, ainsi que l'extrait sec total des compositions préparées.

Chacune des compositions est introduite dans une coupelle en aluminium à fond plat (5 cm de diamètre) en un film ayant une épaisseur d'environ 1 mm. Les coupelles sont introduites dans une étuve chauffée à 180 °C. Au bout de 30 minutes, on les retire, on les laisse refroidir à température ambiante et l'on observe l'épaisseur de la mousse formée :
Echelle de notation :
- : moins de 0,5 cm
+ : 0,5 à 1 cm
++ : 1,1 à 2 cm
+++ : 2,1 à 3 cm
++++ : 3,1 à 4 cm
+++++ : plus de 4 cm

**Tableau 1 Trois composants essentiels**

| Acide dicarboxylique α-hydroxylé (100 mmol) | Catalyseur d'estérification | Tensioactif | Extrait sec (%) | Epaisseur de la mousse |
|---|---|---|---|---|
| Acide tartrique | - | - | 100 | - |
| Acide tartrique | HPS* 9 mmol | - | 100 | - |
| Acide tartrique | - | TTAB/SDS** (1,4/0,9 mmol) | 100 | ++ |
| Acide tartrique | HPS* 9 mmol | TTAB/SDS** (1,4/0,9 mmol) | 100 | ++++ |

| | | | | |
|---|---|---|---|---|
| * Hypophosphite de sodium monohydrate ** bromure de tétradécyltriméthyl ammonium (TTAB) et dodécylsulfate de sodium (SDS) ajoutés sous forme de poudre | | | | |

Les résultats de ce Tableau 1 montrent que trois ingrédients sont nécessaires pour l'obtention d'une mousse durcie de bonne qualité.

**Tableau 2 Différents catalyseurs d'estérification**

| Acide dicarboxylique α-hydroxylé (100 mmol) | Catalyseur d'estérification | Tensioactif | Extrait sec (%) | Epaisseur de la mousse |
|---|---|---|---|---|
| Acide tartrique | HPS 9 mmol | TTAB/SDS (1,4/0,9 mmol) | 100 | ++++ |
| Acide tartrique | HPS 4,5 mmol | TTAB/SDS (1,4/0,9 mmol) | 100 | +++ |
| Acide tartrique | HPS 18 mmol | TTAB/SDS (1,4/0,9 mmol) | 100 | +++++ |
| Acide tartrique | Acide hypophosphoreux 9 mmol | TTAB/SDS (1,4/0,9 mmol) | 100 | ++++ |
| Acide tartrique | Sulfate d'aluminium 9 mmol | TTAB/SDS (1,4/0,9 mmol) | 100 | +++ |
| Acide tartrique | Phosphate d'aluminium 9 mmol | TTAB/SDS (1,4/0,9 mmol) | 100 | +++ |
| Acide tartrique | Sulfate de cuivre (II) 9 mmol | TTAB/SDS (1,4/0,9 mmol) | 100 | ++++ |
| Acide tartrique | Acide sulfurique 9 mmol | TTAB/SDS (1,4/0,9 mmol) | 100 | ++++ |
| Acide tartrique | Acide phosphorique 9 mmol | TTAB/SDS (1,4/0,9 mmol) | 50 | +++ |

Sept catalyseurs d'estérification différents testés donnent, en présence d'un mélange de tensioactifs cationique et anionique, des mousses d'une qualité satisfaisante.

**Tableau 3 Tensioactifs**

| Acide dicarboxylique α-hydroxylé (100 mmol) | Catalyseur d'estérification | Tensioactif | Extrait sec (%) | Epaisseur de la mousse |
|---|---|---|---|---|
| Acide tartrique | HPS 9 mmol | TTAB/SDS (1,4/0,9 mmol) | 100 | ++++ |
| Acide tartrique | HPS 9 mmol | TTAB/SDS (0,7/0,45 mmol) | 100 | +++ |
| Acide tartrique | HPS 9 mmol | Alkyl(C₈-C₁₄)-polyglycoside 2 mmol | 92 | ++++ |

Un tensioactif non-ionique (Alkylpolyglucoside) est une alternative intéressante au mélange de tensioactifs cationique et anionique (TTAB/SDS).

**Tableau 4 Essais comparatifs avec d'autres acides carboxyliques**

| Acide (100 mmol) | Catalyseur d'estérification | Tensioactif | Extrait sec (%) | Epaisseur de la mousse |
|---|---|---|---|---|
| Acide tartrique | HPS 9 mmol | TTAB/SDS (1,4/0,9 mmol) | 100 | ++++ |
| Acide tartrique | Acide sulfurique 9 mmol | TTAB/SDS (1,4/0,9 mmol) | 100 | ++++ |
| Acide malique | Acide sulfurique 4,5 mmol | TTAB/SDS (1,4/0,9 mmol) | 100 | ++++ |
| Acide aspartique | HPS 18 mmol | TTAB/SDS (1,4/0,9 mmol) | 100 | - |
| Acide aspartique | Acide sulfurique 9 mmol | TTAB/SDS (1,4/0,9 mmol) | 100 | - |
| Acide gluconique | HPS 9 mmol | TTAB/SDS (1,4/0,9 mmol) | 52 | - |
| Acide gluconique | Acide sulfurique 9 mmol | TTAB/SDS (1,4/0,9 mmol) | 52 | - |
| Acide tricarballylique | HPS 9 mmol | TTAB/SDS (1,4/0,9 mmol) | 100 | - |
| Acide tricarballylique | Acide sulfurique 9 mmol | TTAB/SDS (1,4/0,9 mmol) | 100 | - |
| Acide lactique | HPS 9 mmol | TTAB/SDS (1,4/0,9 mmol) | 85 | - |
| Acide lactique | Acide sulfurique 9 mmol | TTAB/SDS (1,4/0,9 mmol) | 85 | - |
| Acide citrique | HPS 9 mmol | APG 2 mmol | 92 | - |

Ces résultats montrent que seuls les acides dicarboxyliques de formule (I) forment des mousses.

## Revendications

1. Procédé de fabrication d'une mousse polyester solide, comprenant les étapes successives suivantes :
(a) mise à disposition d'une composition expansible et thermodurcissable contenant
- au moins 60 % en poids, rapporté au poids sec total de la composition, d'au moins un acide dicarboxylique α-hydroxylé de formule (I)
HOOC-(CHR¹)ₙ-CHOH-COOH
où
n est un entier allant de 1 - 4, de préférence de 1 - 3, en particulier 1 ou 2, et de manière tout particulièrement préférée 1, et
chaque R¹ représente indépendemment un atome d'hydrogène, un groupe hydroxyle (-OH) ou un groupe alkyle, de préférence un groupe alkyle en c₁₋₄, et
- un agent tensioactif, et
- un catalyseur d'estérification choisi parmi les acides forts, les sels minéraux de métaux de transition, les composés contenant un atome de phosphore, les composés contenant à la fois du fluor et du bore et les acides de Lewis,
(b) introduction de la composition expansible et thermodurcissable dans un moule ou application de la composition expansible sur un support,
(c) chauffage de la composition expansible et thermodurcissable à une température au moins égale à 140 °C, de préférence comprise entre 160°C et 190 °C, jusqu'à formation d'un bloc de mousse solide.

2. Procédé selon la revendication 1, **caractérisé par le fait que** l'acide dicarboxylique α-hydroxylé représente au moins 70 % et en particulier au moins 80 % du poids sec de la composition expansible et thermodurcissable.

3. Procédé selon l'une quelconque des revendications précédentes, **caractérisé par le fait que** l'acide dicarboxylique α-hydroxylé est l'acide tartrique ou l'acide malique ou un mélange de ces acides, de préférence l'acide tartrique.

4. Procédé selon la revendication 3, **caractérisé par le fait que** le catalyseur d'estérification est l'hypophosphite de métal alcalin, de préférence l'hypophosphite de sodium.

5. Procédé selon l'une quelconque des revendications précédentes, **caractérisé par le fait que** l'agent tensioactif est un mélange d'un tensioactif anionique et d'un tensioactif cationique, de préférence un mélange de dodécylsulfate de sodium (SDS) et de bromure de tétradécyltriméthyl ammonium (TTAB).

6. Procédé selon l'une quelconque des revendications 1 à 4, **caractérisé par le fait que** l'agent tensioactif est choisi parmi les alkylpolyglycosides.

7. Procédé selon l'une quelconque des revendications précédentes, **caractérisé par le fait que** la composition expansible contient au plus 40 % en poids, de préférence au plus 25 % en poids, plus préférentiellement au plus 15 % en poids et en particulier au plus 5 % en poids d'eau.

8. Procédé selon l'une quelconque des revendications précédentes, **caractérisé par le fait que** la composition expansible contient en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

9. Mousse polyester solide susceptible d'être obtenue par le procédé selon l'une quelconque des revendications 1 à 8.

10. Mousse polyester solide selon la revendication 10, **caractérisée par le fait qu'**elle présente une masse volumique comprise entre 20 et 80 kg/m³, de préférence entre 25 et 50 kg/m³, en particulier entre 27 et 48 kg/m³.

11. Mousse polyester solide selon l'une des revendications 9 à 10, **caractérisée par le fait que** le diamètre moyen des pores déterminé par tomographie à rayons X est compris entre 100 et 800 µm.

12. Composition expansible et thermodurcissable contenant
- au moins 60 % en poids, rapporté au poids sec total de la composition, d'au moins un acide dicarboxylique α-hydroxylé de formule (I) HOOC-(CHR¹)ₙ-CHOH-COOH où n est un nombre entier allant de 1 - 4, de préférence de 1 - 3, en particulier 1 ou 2, et de manière tout particulièrement préférée 1, et chaque R¹ représente indépendamment un atome d'hydrogène, un groupe hydroxyle (-OH) ou un groupe alkyle, de préférence en C₁₋₄, et
- un agent tensioactif, et
- un catalyseur d'estérification choisi parmi les acides forts, les sels minéraux de métaux de transition, les composés contenant un atome de phosphore, les composés contenant à la fois du fluor et du bore et les acides de Lewis.

13. Utilisation d'une composition expansible et thermodurcissable selon la revendication 12 pour la fabrication d'une mousse polyester solide.

## Patentansprüche

1. Verfahren zur Herstellung eines festen Polyesterschaums, umfassend die folgenden aufeinanderfolgenden Schritte:
(a) Bereitstellen einer schäumbaren und duroplastischen Zusammensetzung, enthaltend
- zu mindestens 60 Gew.-%, bezogen auf das Gesamttrockengewicht der Zusammensetzung, mindestens eine α-hydroxylierte Dicarbonsäure nach der Formel (I)
HOOC-(CHR¹)ₙ-CHOH-COOH,
worin
n eine ganze Zahl von 1 - 4, vorzugsweise von 1 - 3, insbesondere 1 oder 2 und ganz besonders bevorzugt 1 ist und
jeder R¹ unabhängig ein Wasserstoffatom, eine Hydroxylgruppe (-OH) oder eine Alkylgruppe, vorzugsweise eine c₁₋₄-Alkylgruppe darstellt, und
- ein Tensid und
- einen Veresterungskatalysator, ausgewählt aus starken Säuren, Mineralsalzen von Übergangsmetallen, Verbindungen, die ein Phosphoratom enthalten, Verbindungen, die sowohl Fluor als auch Bor enthalten, und Lewis-Säuren,
(b) Einbringen der schäumbaren und duroplastischen Zusammensetzung in eine Form oder Aufbringen der schäumbaren Zusammensetzung auf einen Träger,
(c) Erwärmen der schäumbaren und duroplastischen Zusammensetzung auf eine Temperatur von mindestens gleich 140 °C, vorzugsweise im Bereich zwischen 160 °C und 190 °C, bis zur Bildung eines festen Schaumstoffblocks.

2. Verfahren nach Anspruch 1, **dadurch gekennzeichnet, dass** die α-hydroxylierte Dicarbonsäure mindestens 70 % und insbesondere mindestens 80 % des Trockengewichts der schäumbaren und duroplastischen Zusammensetzung darstellt.

3. Verfahren nach einem der vorstehenden Ansprüche, **dadurch gekennzeichnet, dass** die α-hydroxylierte Dicarbonsäure Weinsäure oder Äpfelsäure oder ein Gemisch dieser Säuren, vorzugsweise Weinsäure ist.

4. Verfahren nach Anspruch 3, **dadurch gekennzeichnet, dass** der Veresterungskatalysator Alkalimetallhypophosphit, vorzugsweise Natriumhypophosphit ist.

5. Verfahren nach einem der vorstehenden Ansprüche, **dadurch gekennzeichnet, dass** das Tensid ein Gemisch aus einem anionischen Tensid und einem kationischen Tensid, vorzugsweise ein Gemisch aus Natriumdodecylsulfat (SDS) und Tetradecyltrimethylammoniumbromid (TTAB) ist.

6. Verfahren nach einem der Ansprüche 1 bis 4, **dadurch gekennzeichnet, dass** das Tensid aus Alkylpolyglycosiden ausgewählt ist.

7. Verfahren nach einem der vorstehenden Ansprüche, **dadurch gekennzeichnet, dass** die schäumbare Zusammensetzung zu höchstens 40 Gew.-%, vorzugsweise zu höchstens 25 Gew.-%, mehr bevorzugt zu höchstens 15 Gew.-% und insbesondere zu höchstens 5 Gew.-% Wasser enthält.

8. Verfahren nach einem der vorstehenden Ansprüche, **dadurch gekennzeichnet, dass** die schäumbare Zusammensetzung außerdem bis zu 30 Gew.-%, vorzugsweise bis zu 20 Gew.-%, insbesondere bis zu 10 Gew.-%, bezogen auf das Trockengewicht der gesamten schäumbaren Zusammensetzung, einen oder mehrere mineralische oder organische Füllstoffe enthält.

9. Fester Polyesterschaumstoff, der durch das Verfahren nach einem der Ansprüche 1 bis 8 erhalten werden kann.

10. Fester Polyesterschaumstoff nach Anspruch 10, **dadurch gekennzeichnet, dass** er eine Dichte im Bereich zwischen 20 und 80 kg/m³, vorzugsweise zwischen 25 und 50 kg/m³, insbesondere zwischen 27 und 48 kg/m³ aufweist.

11. Fester Polyesterschaumstoff nach einem der Ansprüche 9 bis 10, **dadurch gekennzeichnet, dass** der durch Röntgentomographie bestimmte durchschnittliche Porendurchmesser im Bereich zwischen 100 und 800 µm liegt.

12. Schäumbare und duroplastische Zusammensetzung, enthaltend
- zu mindestens 60 Gew.-%, bezogen auf das Gesamttrockengewicht der Zusammensetzung, mindestens eine α-hydroxylierte Dicarbonsäure nach der Formel (I) HOOC-(CHR¹)ₙ-CHOH-COOH, worin n eine ganze Zahl von 1 - 4, vorzugsweise von 1 - 3, insbesondere 1 oder 2 und ganz besonders bevorzugt 1 ist und jeder R¹ unabhängig ein Wasserstoffatom, eine Hydroxylgruppe (-OH) oder eine Alkylgruppe, vorzugsweise aus C₁₋₄ ist, und
- ein Tensid und
- einen Veresterungskatalysator, ausgewählt aus starken Säuren, Mineralsalzen von Übergangsmetallen, Verbindungen, die ein Phosphoratom enthalten, Verbindungen, die sowohl Fluor als auch Bor enthalten, und Lewis-Säuren.

13. Verwendung einer schäumbaren und duroplastischen Zusammensetzung nach Anspruch 12 für die Herstellung eines festen Polyesterschaumstoffs.

## Claims

1. A process for the manufacture of a solid polyester foam, comprising the following successive stages:
(a) providing an expandable and thermosetting composition containing:
- at least at least 60 weight % of the dry weight of the expandable and thermosetting composition, of at least one α-hydroxylated dicarboxylic acid of formula (I):
HOOC-(CHR¹)ₙ-CHOH-COOH
where:
n is an integer ranging from 1 - 4, preferably from 1 - 3, especially 1 or 2 and very particularly preferably 1, and
each R¹ independently represents a hydrogen atom, a hydroxyl (-OH) group or an alkyl group, preferably a C₁₋₄ alkyl group, and
- a surface-active agent, and
- an esterification catalyst selected from strong acids, inorganic salts of transition metals, compounds containing a phosphorus atom, compounds containing both fluorine and boron, and Lewis acids,
(b) introduction of the expandable and thermosetting composition into a mold or application of the expandable composition to a support,
(c) heating the expandable and thermosetting composition to a temperature at least equal to 140°C, preferably of between 160°C and 190°C, until a solid foam block is formed.

2. The process as claimed in claim 1, **characterized in that** the α-hydroxylated dicarboxylic acid represents at least 70% and especially at least 80% of the dry weight of the expandable and thermosetting composition.

3. The process as claimed in either one of the preceding claims, **characterized in that** the α-hydroxylated dicarboxylic acid is tartaric acid or malic acid or a mixture of these acids, preferably tartaric acid.

4. The process as claimed in claim 3, **characterized in that** the esterification catalyst is alkali metal hypophosphite, preferably sodium hypophosphite.

5. The process as claimed in any one of the preceding claims, **characterized in that** the surface-active agent is a mixture of an anionic surfactant and of a cationic surfactant, preferably a mixture of sodium dodecyl sulfate (SDS) and of tetradecyltrimethylammonium bromide (TTAB).

6. The process as claimed in any one of claims 1 to 4, **characterized in that** the surface-active agent is chosen from alkylpolyglycosides.

7. The process as claimed in any one of the preceding claims, **characterized in that** the expandable composition contains at most 40% by weight, preferably at most 25% by weight, more preferably at most 15% by weight and especially at most 5% by weight of water.

8. The process as claimed in any one of the preceding claims, **characterized in that** the expandable composition additionally contains up to 30% by weight, preferably up to 20% by weight, especially up to 10% by weight, with respect to the dry weight of the total expandable composition, of one or more inorganic or organic fillers.

9. A solid polyester foam obtainable by the process as claimed in any one of claims 1 to 8.

10. The solid polyester foam as claimed in claim 9, **characterized in that** it exhibits a density of between 20 and 80 kg/m³, preferably between 25 and 50 kg/m³, in particular between 27 and 48 kg/m³.

11. The solid polyester foam as claimed in either of claims 9 and 10, **characterized in that** the mean diameter of the pores, determined by X-ray tomography, is between 100 and 800 µm.

12. An expandable and thermosetting composition containing:
- at least 60% by weight, with respect to the total dry weight of the composition, of at least one α-hydroxylated dicarboxylic acid of formula (I) HOOC-(CHR¹)ₙ-CHOH-COOH, where n is an integer ranging from 1 - 4, preferably from 1 - 3, especially 1 or 2 and very particularly preferably 1, and each R¹ independently represents a hydrogen atom, a hydroxyl (-OH) group or an alkyl group, preferably a C₁₋₄ alkyl group, and
- a surface-active agent, and
- an esterification catalyst selected from strong acids, inorganic salts of transition metals, compounds containing a phosphorus atom, compounds containing both fluorine and boron, and Lewis acids.

13. The use of an expandable and thermosetting composition as claimed in claim 12 in the manufacture of a solid polyester foam.
